Europäisches Patentamt

(19) European Patent Office

Office européen des brevets

(11) Publication number: **0 107 879**
**B1**

(12) **EUROPEAN PATENT SPECIFICATION**

(45) Date of publication of patent specification: **07.05.86**

(51) Int. Cl.⁴: **G 03 B 27/24**

(21) Application number: **83201446.8**

(22) Date of filing: **10.10.83**

(54) **Exposure device.**

(30) Priority: **18.10.82 NL 8204012**

(43) Date of publication of application:
**09.05.84 Bulletin 84/19**

(45) Publication of the grant of the patent:
**07.05.86 Bulletin 86/19**

(84) Designated Contracting States:
**CH DE FR GB IT LI NL SE**

(56) References cited:
**GB-A- 915 885**
**US-A-3 161 121**
**US-A-3 947 020**

(73) Proprietor: **Océ-Nederland B.V.**
**St. Urbanusweg 43**
**NL-5914 CC Venlo (NL)**

(72) Inventor: **Deckers, Albert Theodor**
**Oude Pastoriestraat 44**
**Maasbree (NL)**
Inventor: **Leppink, Arie**
**Voltairestraat 22**
**Venlo (NL)**

(74) Representative: **Bleukx, Lucas Lodewijk Maria, Ir.**
**Océ-Nederland B.V. Patents & Information Dept.**
**Postbus 101**
**NL-5900 MA Venlo (NL)**

Courier Press, Leamington Spa, England.

## Description

This invention relates to an exposure device comprising an exposure station, separate feed paths for feeding an original sheet and a light-sensitive sheet towards and onto one another, a path following the feed paths for taking the sheets one upon the other through the exposure station, conveyor means for moving the sheets in the said paths and after the exposure station as considered in the direction of passage, a separator which, in order to separate the sheets automatically, can lead one sheet away from the other sheet. Exposure devices of this kind are known in many embodiments. Depending upon the type of copies required, when contact exposures are carried out the original sheet and the light-sensitive copying sheet are so positioned one upon the other that the two sheets exactly cover one another, or else the original projects beyond the copying sheet (this, for example, will be the case if the original is provided with a reinforcement or suspension strip which is not to be reproduced on the copy), or else the copying sheet projects beyond the original (as will be the case, for example, if the copy is to be provided with an edge for binding or filing).

The known exposure devices usually operate reliably with sheets whose leading edges are situated exactly on one another upon passage through the exposure station.

They also operate reliably if the leading edge of the sheet to be led away by the separator projects in front of the other sheet. In situations in which the other sheet projects the operation of the separator becomes unreliable. In such case the separator may act on the projecting part of the sheet and then lead away that sheet, in consequence of which the two sheets are led away in the same direction and hence there is no separation of the sheets.

Attempts have already been made (see US—A—3 138 374) to make the operation of a separator more reliable by means of a detector disposed between the exposure station and the separator and which, in response to the passage of the packet for exposure, activates the separator so that it operates at a time when the sheet to be led away comes into the range of operation of the separator. This facility really allows reliable separation, at least when the time at which the separator becomes operative is adjusted each time to the relative positions occupied by the sheets to be separated. If the sheets intentionally or unintentionally occupy a different position than the position to which the device is adjusted the separator will operate very unreliably.

The object of the invention is to provide an exposure device with a separator which, irrespective of the relative positions of the sheets, always operates reliably without an adaptation or adjustment being necessary each time.

According to the invention, this object is attained in an exposure device of the kind referred to in the outset, in that a detector is provided in the feed path for the sheet that has to be led away by the separator, which detector in response to the passage of the front edge of the sheet delivers a signal, and in that means are provided which in response to said signal activate the separator with a delay, the delay being equal to the period of time during which the front edge of the sheet is conveyed from the detector up to the separator.

In an exposure device according to the invention, the separator will always become operative at a time when the leading edge of the sheet to be led away comes into the range of operation of the separator. Reliable separation is thus assured in every circumstance. The means for activating the separator may consist of a device known per se for the delayed transmission of signals, or of a time switch.

Of course the delay with which the separator is activated must be adapted to the speed at which the sheets are taken through the exposure device. If, in order to regulate exposure, the speed of passage can be varied, the delay means must also be adjustable to be able to provide the exact adjustment. If the means by which the speed is varied are coupled in a device of this kind to the means with which the delay is adjusted, the required adaptation can always easily be maintained automaticallly.

In an advantageous embodiment of the exposure device according to the invention an automatic adaptation of the delay to the speed of passage is obtained in that the delay means consist of a pulse generator coupled to the conveyor means and of an adjustable pulse counter which, when started by the detector, counts the generated pulses and delivers an activating signal for the separator when the set number is reached.

In a preferred embodiment, the exposure device according to the invention is provided with a second detector disposed in the path along which the separator leads away the separated sheets, the second detector deactivating the separator in response to the passage of the front edge of the sheet. Consequently, the separator is operative only during the periods when sheet separation is achieved and periods during which the leading part of a sheet to be led away is situated in the range of operation of the separator. The noise nuisance usually associated with the separation of sheets is thus minimized.

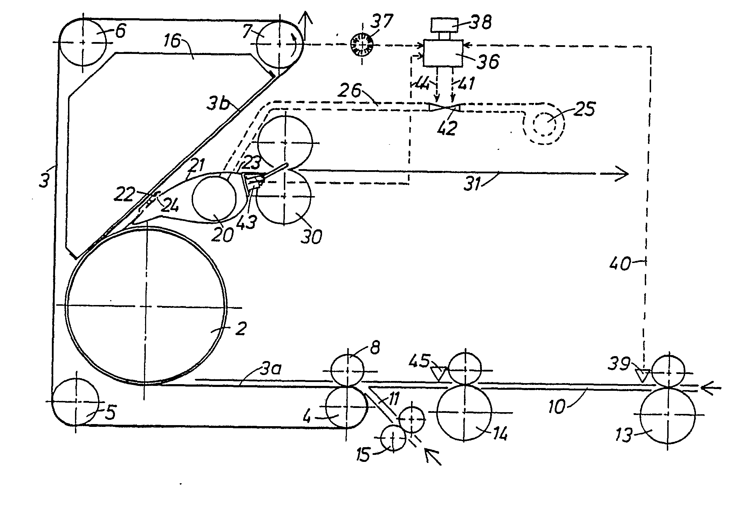

Other features and advantages will be apparent from the following description of an embodiment with reference to the accompanying drawing, which schematically represents an exposure device according to the invention in section.

The exposure device represented in the drawing comprises a rotatable exposure cylinder 2, containing a light source (not shown). A number of endless conveyor belts 3 disposed side by side are trained around cylinder 2 and a number of guide rollers 4, 5, 6 and 7. Guide roller 7 can be driven by means not shown in the direction indicated by the arrow in order to drive the belts 3 and hence the cylinder 2 at an adjustable speed.

A pressure roller 8 forms a nip with the horizontal belt parts 3a extending in front of the exposure cylinder as considered in the direction of movement of the belts. Sheets moved towards one another along the paths 10 and 11 respectively are positioned one upon the other in the nip and are pressed against the cylinder 2 by the belts 3. The feed path 10 has pairs of conveyor rollers 13 and 14 and the feed path 11 has a pair of conveyor rollers 15 driven at the same speeds as the driven guide roller 7.

A suction box 16 is disposed above the belt part 3b extending between the cylinder 2 and the guide roller 7 and exerts its action between the belt parts 3b so that a continuous suction is applied to a sheet in contact with these belt parts.

A separator of type known per se (see US—A—2 441 912) operating by the so-called Bernouilli effect is provided at the underside of these belt parts 3b and near the cylinder 2. The separator comprises a tube 20, whose wall 21 facing the belt parts 3b as considered in the direction of movement of the belts 3 runs tangentially away from the belts from a wall part 22 close to and parallel to the bolt parts 3b, to a wall part 23 including an angle of about 45° with the belt part 3b. Tube 20 is provided with a number of apertures 24 in the wall part 22, from which air can flow, which is supplied by a fan 25 via duct 26. The air supply duct 26 is connected via two distributing-ducts (not shown) to the two ends of the tube 20. Air supply duct 26 contains a valve 42 which when closed prevents air from flowing out of the apertures 24. When the exposure device is switched on and ready for use the fan 25 rotates continuously, but the valve 42 is closed.

Apertures 24 in tube 20 are so disposed that the air flows in the direction of conveyance of the belts along the wall 21 of the tube and creates a partial vacuum in the space between the wall 21 and the belt parts 3b.

A pair of conveyor rollers 30 is disposed after the wall part 23 of the tube 20 as considered in the direction of movement of the sheets and can discharge via path 31 a sheet led away from the belt parts 3b.

Reference 36 denotes a control unit. A pulse disc 37 is coupled to the driven guide roller 7 and rotates in synchronism with the drive roller. A pulse counter 38 co-operates with the rotating pulse disc 37 to count the number of pulses emitted by the pulse disc. A detector 39 is disposed in the feed path 10 for the originals and responds to the leading edge of an introduced original and then delivers a signal 40 to the control unit 36 so that the counter 38 starts a count. Pulse counter 38 can be set to a number representative of the distance that an original has to cover between the detector 39 and the apartures 24 in the tube 20 of the separator.

When the set number is reached, the counter delivers a signal 41 which is used to open the valve 42 in the air supply duct 26. Control unit 36 contains means known per se to stop the count when the counter 38 has reached the set number, and to prepare the counter for the next count.

Near the wall part 23 of tube 20, discharge path path 31 contains a detector 43 which responds when the leading edge of an original is engaged by the pair of conveyor rollers 30 and then delivers a signal 44 used to close the valve 42. Instead of detector 43, control unit 36 could alternatively be so arranged that counter 38 continues to count when reaching the number set for opening the valve 42, and delivers a signal for closing the valve when a second set number is reached.

The feed path 10 for the originals also contains a second detector 45 to detect the front edge of an original moving in that path and, in response thereto, to start the supply of a light-sensitive sheet as will be explained hereinafter.

The operation of the exposure device will now be explained with reference to a number of practical cases, reference being made to the drawing. We assume that, as is usual in this type of apparatus, a light-sensitive sheet is in a position of readiness between the rollers 15. When an original sheet is introduced and advanced in the path 10 by rollers 13 and 14 it will pass detector 45 which in response thereto starts the rollers 15 so that the light-sensitive sheet is advanced along path 11 and both sheets are placed one upon the other in the nip between the rollers 4 and 8. By making the detector 45 movable, as considered in the direction of advance of the original sheet, the sheets can be placed one upon the other in any desired position.

If an original sheet having, for example, a 70 mm suspension strip is to be imaged without the strip, then the supply of the light-sensitive sheet via path 11 will, as indicated hereinbefore, accordingly be started later than the supply of the original sheet via path 10 in order to achieve the required offset conveyance. When the front edge of the original introduced passes the detector 39, signal 40 initiates a count by counter 38. When the front edge in question then passes the apertures 24, the count will have reached a specific value and signal 41 causes valve 42 to open so that air starts to flow out via the apertures 24 as a result of which the original is drawn away in a flowing movement from the belt parts 3b and is lead away over the wall 21. The light-sensitive sheet, which is drawn against the belt parts 3b by the suction, continues on its way to a developing device (not shown). The air flow is shut off again when the original is engaged by rollers 30 and meets detector 43, so that the separator is deactivated immediately after separation has taken place. Noise nuisance caused by air vibrations or fluttering of the separated sheet is thus minimized.

If the copy is required to have an edge without any information, e.g. a 30 mm edge for punching holes, the supply of the light-sensitive sheet via path 11 is so effected that the front edge of the light-sensitive sheet reaches the nip between the roller 8 and belts 3 before the front edge of the original does. A separating air flow is correspondingly produced in this case when the front edge of the original comes within the range of the separator. This air flow cannot act on the light-sensitive sheet now leading, because the air flow is not produced until the leading edge of the original passes so that the light-sensitive sheet can follow its way to a developing device (not shown) in the normal way.

Here too the separator is deactivated immediately after separation has taken place.

It will be apparent that a number of counters 38 can co-operate with the control unit 36, each of the consecutively introduced original sheets initiating a count by another counter. In this way the separator can also continue to operate if a subsequent original is introduced already while the preceding original has not yet been separated by the separator. This may be desirable particularly for short originals.

A separator of the pneumatic type has been described hereinbefore but of course the invention is also applicable to devices with different types of separator, e.g. friction separators.

## Claims

1. An exposure device comprising an exposure station, separate feed paths (10, 11) for feeding an original sheet and a light-sensitive sheet towards and onto one another, a path following the feed paths for taking the sheets one upon the other through the exposure station, conveyor means (3—7, 13—15) for moving the sheets in the said paths and, after the exposure station as considered in the direction of passage, a separator (20—24) which, in order to separate the sheet automatically, can lead one sheet away from the other sheet, characterised in that a detector (39) is provided in the feed path (10) for the sheet that has to be led away by the separator (20—24), which detector in response to the passage of the front edge of the sheet delivers a signal (40), and in that means (36—38) are provided which in response to said signal (40) activate the separator (20—24) with a delay, the delay being equal to the period of time during which the front edge of the sheet is conveyed from the detector (39) upto the separator (20—24).

2. An exposure device according to claim 1, characterised in that the said means (36—38) comprise a pulse generator (37) coupled to the conveyor means (3—7, 13—15), and an adjustable pulse counter (38) which, when started by the signal (40) of the detector counts the generated pulses and, when the set number is reached, delivers an activating signal (41) for the separator.

3. An exposure device according to any of the preceding claims, characterised in that switching means (36) are provided which deactivate the separator (20—24) at the time that the front edge of the sheet led away leaves the range of operation of the separator (20—24).

4. An exposure device according to claim 3, characterised in that the said switching means (36) comprise a detector (43) disposed in the path (31) along which the sheet separated by the separator (20—24) is led away, said detector (43) in response to the passage of the front edge of the separated sheet delivering a signal (44) to deactivate the separator (20—24).

5. An exposure device according to claim 1 or 2, in which the separator (20—24) operates pneumatically by creating a lower air pressure at the side of the sheets facing the separator (20—24), characterized in that the separator is connected to an air pump (25) via a duct (26) containing a valve (42) which, in response to the signal (40) delivered by the detector (39), is opened to activate the separator.

6. An exposure device according to claim 3 or 4 and 5, characterised in that to deactivate the separator (20—24) the valve (42) is closed by said switching means at the time that the front edge of the sheet led away leaves the range of operation of the separator.

## Patentansprüche

1. Belichtungsgerät mit einer Belichtungsstation, getrennten Zuführbahnen (10, 11) zur Zufuhr eines blattförmigen Originals und eines Lichtempfindliches Blatts zu- und aufeinander, mit einer an die Zuführbahn anschliessenden Bahn zum Transport der aufeinanderliegenden Blätter durch die Belichtungsstation, mit einer Fördereinrichtung (3—7, 13—15) zum Transport der Blätter entlang den Bahnen sowie mit einer in Transportrichtung hinter der Belichtungsstation, angeordneten Trenneinrichtung (20—24), die zum Zwecke einer automatischen Trennung der Blätter ein Blatt von dem anderen Blatt wegleiten kann, dadurch gekennzeichnet, dass ein Detektor (39) in der Transportbahn (10) für das Blatt vorgesehen ist, das durch die Trenneinrichtung (20—24) wegzuleiten ist, welcher Detektor in Abhängigkeit von dem Durchtritt der Vorderkante des Blatts ein Signal (40) liefert, und dass eine Einrichtung (36—38) vorgesehen ist, welche in Abhängigkeit von dem Signal (40) die Trenneinrichtung (20—24) mit einer Verzögerung aktiviert, welche Verzögerung gleich der Zeitspanne ist, während der die Vorderkante des Blatts von dem Detektor (39) zu der Trenneinrichtung (20—24) transportiert wird.

2. Belichtingsgerät nach Anspruch 1, dadurch gekennzeichnet, dass die Einrichtung (36—38) einen mit der Fördereinrichtung (3—7, 13—15) gekoppelten Impulsgenerator (37) und einen einstellbaren Impulszähler (38) enthält, der bei einer durch das Signal (40) des Detektors eingeleiteten Zählung die erzeugten Impulse zählt und beim Erreichen der eingestellten Zahl ein Aktivierungssignal (41) an die Trenneinrichtung liefert.

3. Belichtungsgerät nach einem der vorhergehenden Ansprüche, dadurch gekennzeichnet, dass eine Schaltungseinrichtung (36) vorgesehen ist, welche die Trenneinrichtung (20—24) zu dem Zeitpunkt entaktiviert, in dem die Vorderkante des weggeleiteten Blatts den Wirkungsbereich der Trenneinrichtung (20—24) verlässt.

4. Belichtungsgerät nach Anspruch 3, dadurch gekennzeichnet, dass die Schalteinrichtung (36) einen Detektor (43) enthält, der in der Bahn (31) angeordnet ist, entlang der das durch die Trenneinrichtung (20—24) getrennte Blatt abgeleitet wird, welcher Detektor (43) in Abhängigkeit von dem Durchtritt der Vorderkante des abgetrennten Blatts ein Signal (44) zur Entaktivierung der Trenneinrichtung (20—24) zuführt.

5. Belichtungsgerät nach Anspruch 1 oder 2, in welchem die Trenneinrichtung (20—24) durch Erzeugung eines geringeren Luftdrucks auf der zu der Trenneinrichtung (20—24) weisenden Seite der Blätter pneumatisch arbeitet, dadurch gekennzeichnet, dass die Trenneinrichtung mit einer Luftpumpe (25) über einer Leitung (26) verbunden ist, die ein ventil (42) enthält, das in Abhängigkeit von dem von dem Detektor (39) zugeführten Signal (40) geöffnet wird, um die Trenneinrichtung zu aktivieren.

6. Belichtungsgerät nach Anspruch 3 oder 4 und 5, dadurch gekennzeichnet, dass zur Entaktivierung der Trenneinrichtung (20—24) das Ventil (42) durch die Schalteinrichtung zu dem Zeitpunkt geschlossen wird, in dem die Vorderkante des abgeleiteten Blatts den Wirkungsbereich der Trenneinrichtung verlässt.

## Revendications

1. Dispositif d'illumination comprenant un poste d'exposition, des trajets de distribution séparés (10, 11) pour distribuer une feuille originale et une feuille sensible à la lumière l'une vers l'autre et l'une sur l'autre, un trajet à la suite des trajets de distribution pour prendre les feuilles l'une sur l'autre à travers le poste d'exposition, des moyens transporteurs (3—7, 13—15) pour déplacer les feuilles dans les trajets et, après le poste d'exposition considéré dans le sens du passage, un séparateur (20—24) qui, afin de séparer automatiquement les feuilles, peut amenée une feuille à l'ecart de l'autre feuille, caractérisé en ce qu'un détecteur (39) est prévu dans le trajet de distribution (10) pour la feuille qui doit être amenée à l'écart par la séparateur (20—24), ce détecteur en réponse au passage du bord avant de la feuille délivrant un signal (40), et en ce que des moyens (36—38) sont prévus qui, en réponse audit signal (40), actionnent le séparateur (20—24) avec un retard, le retard étant égal à la période de temps durant laquelle le bord avant de la feuille est transporté depuis le détecteur (39) jusqu'au séparateur (20—24).

2. Dispositif d'illumination suivant la revendication 1, caractérisé en ce que lesdits moyens (36—38) comprennent un générateur (37) d'impulsions couplé aux moyens transporteurs (3—7, 13—15) et un compteur d'impulsions (38) réglable qui, lorsqu'il est démarré par le signal (40) de détecteur, compte les impulsions engendrées et, lorsque le nombre déterminé est atteint, délivre un signal (41) d'actionnement pour le séparateur.

3. Dispositif d'illumination suivant l'une quelconque des revendications précédentes, caractérisé en ce que des moyens de commutation (36) sont prévus, qui arrêtent le séparateur (20—24) à l'instant où le bord avant de la feuille séparée quitte la plage d'action du séparateur (20—24).

4. Dispositif d'illumination suivant la revendication 3, caractérisé en ce que lesdits moyens (36) de commutation comprennent un détecteur (43) disposé dans le trajet (31) suivant lequel la feuille séparée par le separateur (20—24) est conduite à l'écart, ledit détecteur (43) délivrant un signal (44) en réponse au passage du bord avant de la feuille séparée afin d'arrêter le séparateur (20—24).

5. Dispositif d'illumination suivant la revendication 1 ou 2, dans lequel le séparateur (20—24) fonctionne pneumatiquement en créant une pression d'air plus faible sur la face des feuilles dirigée vers le séparateur (20—24), caractérisé en ce que le séparateur est relié à une pompe à air (25) par l'intermédiaire d'une conduite (26) contenant une vanne (42) qui, en réponse au signal (40) délivré par le détecteur (39), est ouverte pour actionner le séparateur.

6. Dispositif d'illumination suivant la revendication 3 ou 4 et 5, caractérisé en ce que pour arrêter le séparateur (20—24), la vanne (42) est fermée pas lesdits moyens de commutation à l'instant auquel le bord avant de la feuille conduite à l'écart quitte la plage d'action du séparateur.